(19) **Europäisches Patentamt / European Patent Office / Office européen des brevets**

(11) **EP 3 273 275 B1**

(12) **EUROPEAN PATENT SPECIFICATION**

(45) Date of publication and mention
of the grant of the patent:
**12.01.2022 Bulletin 2022/02**

(51) Int Cl.:
***G01V 5/00*** (2006.01)

(21) Application number: **17173618.4**

(22) Date of filing: **31.05.2017**

(54) **METHOD AND SYSTEM FOR SECURITY INSPECTION**

VERFAHREN UND SYSTEME ZUR SICHERHEITSINSPEKTION

PROCÉDÉ ET SYSTÈME D'INSPECTION DE SÉCURITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2016 CN 201610587518**

(43) Date of publication of application:
**24.01.2018 Bulletin 2018/04**

(73) Proprietor: **Nuctech Company Limited**
**TongFang Building,**
**Shuangqinglu,**
**Haidian District**
**Beijing 100084 (CN)**

(72) Inventors:
• **LI, Juxuan**
**BEIJING, 100084 (CN)**

• **XU, Yanwei**
**BEIJING, 100084 (CN)**
• **YU, Weifeng**
**BEIJING, 100084 (CN)**

(74) Representative: **Cabinet Beau de Loménie**
**158, rue de l'Université**
**75340 Paris Cedex 07 (FR)**

(56) References cited:
**EP-A1- 2 236 387        EP-A2- 2 983 012**
**WO-A1-2016/060542    CN-A- 105 445 808**
**CN-A- 105 447 528     CN-A- 105 548 223**
**US-A1- 2013 230 139**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The present invention relates to the field of security inspection and, in particular, to a method and a system for security inspection.

## BACKGROUND

With rapid increase in trades between countries around the world, and the increasingly serious international security situation, security inspection systems now have become indispensible systems for national customs, airports, transport stations and other public places.

An accelerator is a ray source which generates X-rays by utilizing a magnetic field or an electric field to accelerate electrons shooting a target. Accelerators are widely applied in security systems, especially in systems for inspecting large containers. Since they have high energy, excellent penetrating effects and safe for transportation, and have no pollution incurred, accelerators are more and more favored by users.

In a system for fast inspecting a cargo train, application of the accelerator is becoming more and more common. Moreover, since the inspection is fast, a train is driven by a driver to pass through a scanning channel. Then, it must be ensured that the accelerator must be controlled to emit a beam when the person on the vehicle is safe. In addition, in this case, it is necessary to further improve the quality of the scanned image, in order to improve the accuracy of the inspection.

Therefore, the following problems arise in the related art: when the speed of the vehicle is changing in real time, how to control the speed of the accelerometer to ensure that the scanned image is not deformed; in the process of passive scanning, how to control the timing for the accelerator to emit a beam; how to ensure the safety of the persons on the trains against rays during the scanning process; how to gradually increase the dose of the accelerator when scanning the image; and how to determine a real-time air value of different frequencies required by image processing for each train scanned.

The above information disclosed in this Background section is for the purpose of reinforcing the understanding of the background of the present invention and therefore can include information that does not constitute prior art known to those of ordinary skill in the art.

CN105445808A discloses a security inspection device and method and a controller allowing operation of an accelerator voltage as well as a filament voltage and enabling the electron gun. A filament voltage is applied before a magnet is activated. The filament voltage is reduced when shutting down the radiation to allow entry into a stand-by mode.

CN105447528A discloses determining a license number and model of a train by means of a digital camera and setting the frequency of line-scan digital partial imaging proportion to an average speed of the train. The document shows X-ray scanning to determine different portions of the train.

EP2236387 discloses determining the distance between train compartments and speed in order to determine the proper beam flux stabilizing period for the accelerator.

CN105548223A discloses control of accelerator dose rate output or the electron beam energy.

WO2016/060542 discloses automated scanning of a moving vehicle for determining when to warm up the accelerator and operation in this standby mode for a long period.

## SUMMARY

In view of one or more of the above problems, the present application discloses a method and a system for security inspection, which is capable of further ensuring scanning safety and / or further improving the quality of scanned images. The invention is defined by a method for security inspection according to claim 1, a system for security inspection according to claim 4, and a computer program according to claim 10. Further embodiments are defined by the dependent claims.

Other features and advantages of the present invention will become apparent from the following detailed description, or in part, may be learned from practice of the present invention.

The computer program can use any programming language and take the form of source code, object code or a code intermediate between source code and object code, such as a partially compiled form, or any other desirable form.

The invention, though not claimed, is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

## BRIEF DESCRIPTION OF THE DRAWINGS

The above and other features and advantages of the present disclosure will become more apparent by describing in detail the exemplary embodiments thereof with reference to the accompanying drawings.

Fig. 1 schematically illustrates the principle of matching a beam emitting frequency of an accelerator with a speed of a train according to an embodiment of the present disclosure;

Fig. 2 schematically illustrates a method for controlling an accelerator to emit a beam based on vehicle information according to an exemplary embodiment of the present disclosure;

Fig. 3 schematically illustrates a method for controlling an accelerator to emit a beam according to an exemplary embodiment of the present disclosure;

Fig. 4 illustrates a beam profile by employing a method for controlling an accelerator to emit a beam in the related art;

Fig. 5 illustrates a beam profile by employing a method for controlling an accelerator to emit a beam according to an exemplary embodiment of the present disclosure;

Fig. 6 illustrates a flowchart of a method for security inspection according to an exemplary embodiment of the present disclosure;

Fig. 7 illustrates a block diagram of a system for security inspection according to an exemplary embodiment of the present disclosure; and

Fig. 8 illustrates a block diagram of a system for security inspection according to another exemplary embodiment of the present disclosure.

## DETAILED DESCRIPTION

The exemplary embodiments will now be described more fully with reference to accompanying drawings. However, the exemplary embodiments may be embodied in many forms and should not be construed as limited to the embodiments set forth herein. Rather, providing such embodiments makes the present disclosure thorough and complete, and will fully convey the concepts of the exemplary embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, many specific details are provided to give a full understanding of the embodiments of the present disclosure. However, those skilled in the art will appreciate that one or more of these specific details may be practiced without practicing the technical solutions of the present disclosure, or other methods, components, materials, devices, steps, and the like may be employed. In other instances, well-known structures, methods, devices, implementations, materials, or operations are not shown or described in detail to avoid obscuring aspects of the present disclosure.

The block shown in the figures merely denotes a functional entity and does not necessarily have to correspond to a physically separate entity. That is, these functional entities may be implemented in software form or may be implemented in one or more software-hardened modules as these functional entities or a part of the functional entities, or in various networks and/or processor devices and/or microcontrollers, to implement these functional entities.

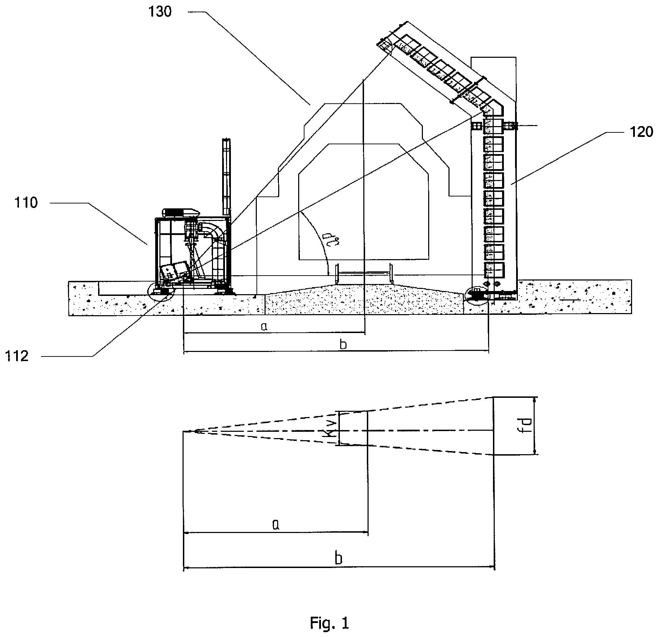

Fig. 1 schematically illustrates the principle of matching a beam emitting frequency of an accelerator with a speed of a train according to an embodiment of the present disclosure.

Referring to Fig. 1, a distance from a target point 112 of an accelerator 110 to a center line of a train 130 is denoted as $a$. A distance from the target point 112 of the accelerator 110 to a detector 120 is denoted as $b$. A vehicle speed is denoted as $V$. A width of a cross section of the detector 120 is denoted as $d$. A beam emitting frequency of the accelerator is denoted as $f$. $K$ denotes an oversampling parameter. According to the principle of similar triangular:

$$a/b = Kv/fd.$$

Then the beam emitting frequency of the accelerator is: $f = vKb/ad$.

According to the above corresponding relationship between the beam emitting frequency of the accelerator and the train speed, it is possible to control the beam emitting frequency of the accelerator according to the vehicle speed during the scanning process. Thus, since the vehicle speed is matched with the beam emitting frequency of the accelerator, the deformation of the scanned image can be reduced or eliminated, and the accuracy of the security inspection can be further improved.

The train speed can be measured in a variety of ways. The train speed can be directly measured by a speed sensor such as a speed radar disposed near a linear array camera. Alternatively, the train speed can also be measured by measuring two time instances when the train passes two position sensors such as two ground induction coils (wheel-rim sensors) and/or photoelectric switches and/or electronic light curtains and measuring a distance between the two sensors. The train speed can be measured with a variety of existing known methods for measuring speed, which will not repeated herein.

According to some embodiments, real-time air data at multiple frequencies can be obtained after each time a train image has been scanned, as a calibrated air value for the next scanned train.

When the trains are scanned with different beam emitting frequencies depending on different speeds, before the scanning, the image processing requires real-time air values at different frequencies. Since it is not sure when the train will come, and once the train comes, there is not enough time to acquire the air values, the air values can generally be acquired after the images for the previous train has been scanned. According to some embodiments of the present disclosure, when a tail of a train has left a curtain of a scanning channel, the system controls the accelerator to emit a beam for a second time, to perform a static multi-frequency air process, in order to acquire air values at different frequencies for scanning the next train.

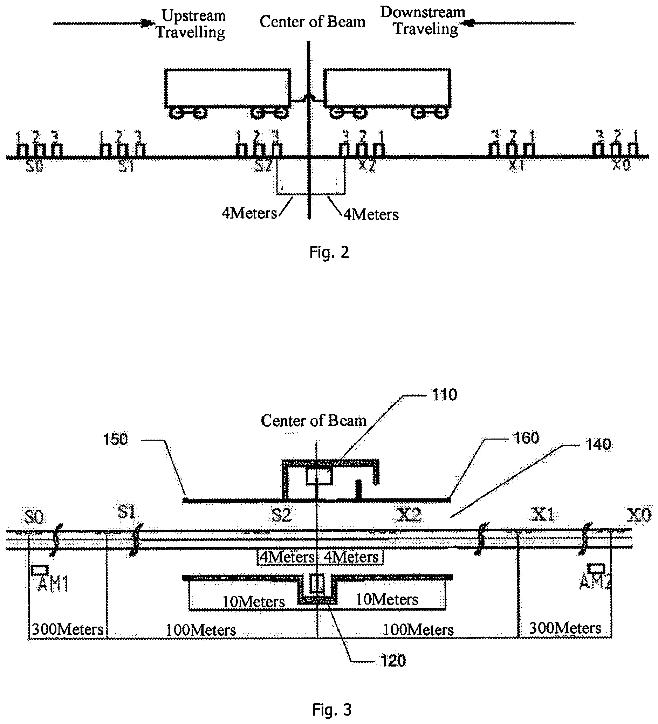

Fig. 2 schematically illustrates a method for controlling an accelerator to emit a beam based on vehicle information according to an exemplary embodiment of the present disclosure. Fig. 3 schematically illustrates a method for controlling an accelerator to emit a beam according to an exemplary embodiment of the present disclosure.

Referring to Fig. 2, the control methods for upstream travelling and downstream travelling are similar. The following example will be described with reference to upstream travelling.

According to some embodiments, wheel-rim sensors are disposed on rails on both sides of the scanning device, to acquire signals of the wheel rim of the train via the sensors. Then, the position of the train, the train speed, the wheel base distance and a section signal of two compartments etc. can be calculated, which belong to known knowledge of the art and will not be elaborated herein. It is to be understood that the present disclosure is not limited thereto and that other known methods can be used for measurement and calculation.

Referring to Figs. 2 and 3, according to an embodiment, sensor sets S0, S1, S2 are respectively disposed at 400 meters, 100 meters and 4 meters from the center of the beam. The sensor set S2 can be used to generate a coupler signal.

Since the last wheel of a compartment is generally 3-4 meters away from the coupler (i.e., couplers between train carriages, used for coupling the carriages), the sensor set S2 can be disposed at about 4 meters from the center of the beam. Before the center of each coupler on the train reaches the center of the beam, the sensor set S2 can send a coupler signal a period of time ahead. If a distance from the sensor set S2 to the center of the beam is denoted as G, a distance a hooks interval between two compartments (a distance between the last wheel of the former compartment and the first wheel of the latter compartment) is denoted as $D$, and a first wheel base distance, a distance between a first wheel and a second wheel of the latter compartment is denoted as L. When the second wheel of the latter compartment reaches the sensor set S2, a coupler signal can be sent out. The coupler signal can be used to calculate a delay time when the coupler reaches the center of the beam.

The sensor set S1 can, for example, be disposed at 100 meters from the center of the beam. For example, if the maximum train speed is 8 m/s, it takes about 100 m to stabilize the accelerator for a train of 8 m/s since the accelerator typically needs 6-8 seconds from the magnetized high voltage to stabilization.

The sensor set S0 to the sensor set S1 can have a distance of, for example, 300 meters, to provide 40 seconds for an operator to confirm whether the train is carrying passengers or cargoes and operate the key by monitoring the data line.

When the train arrives at the sensor set S0, the system enters an enabled state according to the signal of the sensor set S0. For example, the operator is prompted to manually judge whether the train is a passenger train or a cargo train through a video monitor and turn a safety interlock key into an ON state.

When the vehicle arrives at the sensor set S1, the system controls the accelerator to enter a beam warm-up state. In the beam warm-up state, the system can control the accelerator to impose a high voltage, so that the beam emitting frequency of the accelerator can be increased to a frequency matched with the moving speed of the train. But the electron gun of the accelerator is not imposed with a high voltage.

With the movement of the vehicle, the system identifies the current train as a cargo train according to information from the sensor set S2. Then, a dialog box is popped out on an operation interface, prompting the operator to confirm whether or not to scan. After the operator confirms, the dialog box disappears and the system maintains the beam warm-up state. On the contrary, based on the sensor set S1 information, it is identified that the current train is a passenger train, or the operator cancels the scan, the system can turn off the scanning device.

If the beam warm-up state is maintained, when the locomotive passes through the sensor set S2, the system can calculate a time when a cargo train compartment available for scanning reaches the center of the beam based on information from the sensor set S2. This belongs to known technology of the art and will not be elaborated herein. According to the calculated time, the system can control the accelerator to emit a beam to scan the train. Although Fig. 2 shows that the sensor set S2 is 4 meters away from the center of the beam, it can be appreciated that this is merely for illustration, and is not a limitation to the present disclosure. All the distance values in the following figures can be interpreted in the same way.

In the scanning process, the final wheel of each compartment leaves the sensor set S2, the system can send a compartment section signal to divide the image into images of each compartment according to information from the sensor set. The section signal and the division of the compartment image belong to known technology of the art and will not be elaborated herein.

When the last one compartment leaves the sensor set S2 and leaves the center of the beam, the system ceases emitting a beam and finishes the image scanning.

The downstream scanning process is similar to the upstream scanning process. The upstream sensor sets S0, S1 and S2 and the downstream sensor sets X1, X2 and X3 respectively include three sensor sets 1, 2 and 3. The train speed and wheel base distance of the train can be calculated using two of the three sensors, and the other sensor can be used for redundancy and spare.

In this method, in order to ensure the safety of the persons on the train against radiation, the scan can be performed based on the following principles:

a) only the locomotive is at the front of the train, the system can start the scanning process;
b) no matter how many locomotives there are, the locomotives are not scanned;
c) when the locomotive is at the front of the train, the locomotive and the cargo compartment adjacent to and following the locomotive are not scanned;
d) when the locomotive in at the rear of the train or at the middle of the train, the locomotive and the one compartment adjacent to and in front of the locomotive are not scanned; and
e) if the locomotive is adjacent to a passenger compartment at the rear of the locomotive, the locomotive, the passenger compartment and the one cargo compartment after the passenger compartment are not scanned; if the passenger compartment is at the middle of the train, the passenger compartment, one compartments adjacent to and before the passenger compartment and one compartments adjacent to and after the passenger compartment are not scanned; and if there are a successive of passenger compartments, the successive of passenger compartments, one cargo compartment adjacent to and before the adjacent to and before the passenger compartment, and one cargo compartment adjacent to and after the adjacent to and before the passenger compartment are not scanned.

There is a gradually rising time from the accelerator starts to emit a beam to the dose gets stabilized. The higher the beam emitting frequency is, the more significant the gradually rising time is. There are two conditions for the accelerator to emit a beam: firstly, a microwave magnetic field for accelerating electrons; secondly, an electron gun for producing electrons. The electrons are accelerated through the microwave magnetic field to shoot the target, to generate X-rays.

If the accelerator is firstly imposed with a high voltage and a beam emitting frequency, and then with electrons, the accelerator has a short dose rising time and stabilized. However, if the high voltage and the beam emitting frequency are imposed firstly, since there are a small amount of free electrons in the accelerating tube, the electrons will be accelerated by the microwave to shoot the target and to generate a small amount of X rays. Since the X rays generated by the hidden current will affect the driver of the train, they must be controlled within a small dose range which is harmless to a human body. In the related art, a mechanical shutter is generally utilized to control it.

According to another embodiment of the present disclosure, for example, with reference to the above upstream train, referring to Fig. 3, when the train reaches the sensor set S0, the system will enter an enabled state based on the information from the sensor set S0. For example, the operator is prompted to manually judge whether the train is a passenger train or a cargo train through a video monitor AM1 (or a downstream AM2), and turn a safety interlock key into an ON state.

When the vehicle arrives at the sensor set S1, the system can control the accelerator to impose a high voltage and impose the beam emitting frequency to a beam emitting range which matches with the speed. Then, the accelerator starts to warm up for beam emitting. At this time, the electron gun of the accelerator is not imposed with a high voltage.

With the movement of the vehicle, the system identifies the current train as a cargo train according to information from the sensor set S2. Then, a dialog box is popped out on an operation interface, prompting the operator to confirm whether or not to scan. After the operator confirms, the dialog box disappears and the system maintains the beam warm-up state. On the contrary, based on the sensor set S1 information, it is identified that the current train is a passenger train, or the operator cancels the scan, the system can turn off the scanning device.

When the locomotive arrives at the entrance light curtain 150 of the scanning channel 140, the beam emitting frequency of the accelerator is decreased to one tenth or less of a frequency matching with the normal speed but not to zero, to facilitate immediate recovery of the dose when the accelerator emits a beam properly. At this time, X-rays generated by the hidden current are harmless to the human body.

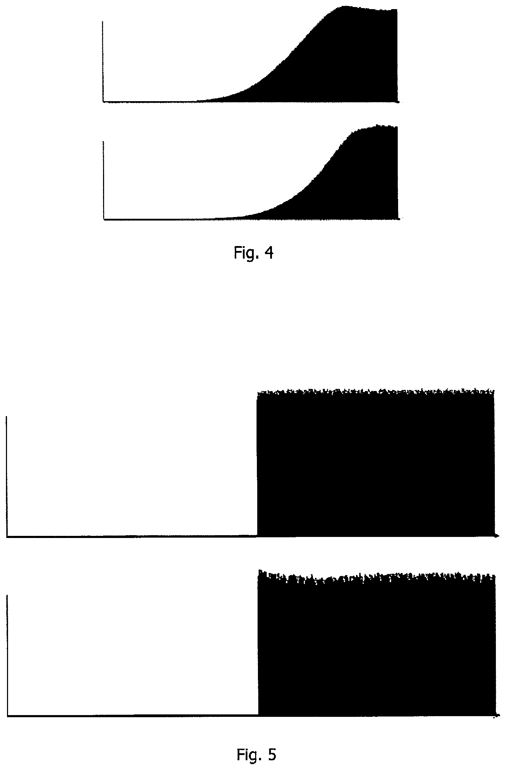

When the locomotive (or both the locomotive and its adjacent compartment) passes through the sensor set S2 and leaves the center of the beam, the beam emitting frequency returns to a value matching with the vehicle speed and the microwave returns to normal. When the first compartment passes through the center of the beam, the accelerator enables the electron gun to generate electrons and the accelerator properly emit beams. With this solution, the dose can be stabilized and the scanned image is not deformed, as shown in Fig. 5. While in the conventional control solution of the accelerator, that is, the microwave and the electron gun are enabled at the same time, the dose of the accelerator will rise gradually, as shown in Fig. 4.

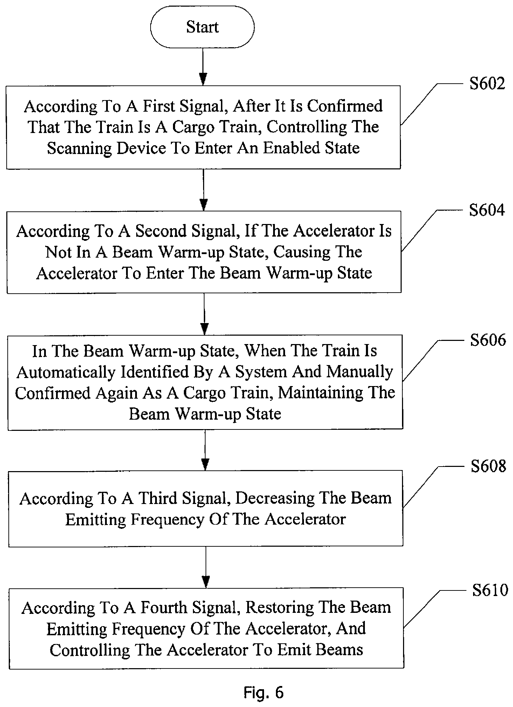

Fig. 6 illustrates a flowchart of a method for security inspection according to an exemplary embodiment of the present disclosure.

The method as shown in Fig. 6 can be used for security inspection on a train with a scanning device. The scanning device can include an accelerator and a detector. Hereinafter, the method for security inspection according to an exemplary embodiment will be described with reference to Fig. 6. The method applies one or more of the solutions described above. It should be noted that, Fig. 6 only schematically illustrates steps involved in the method according to the exemplary embodiment of the present disclosure, which is not for limitation.

Referring to Fig. 6, at step S602, according to a first signal, after it is confirmed that the train is a cargo train, the scanning device is controlled to enter an enabled state.

The first signal can be a signal for determining whether the train has come, and can be acquired through the sensor set S0. As described above, it is possible that, for example, the operator is prompted to manually judge whether the train is a passenger train or a cargo train through a video monitor and turn a safety interlock key into an ON state.

At step S604, according to a second signal, if the accelerator is not in a beam warm-up state, the accelerator is caused to enter the beam warm-up state.

As described above, according to some embodiments, causing the accelerator to enter the beam warm-up state can include: the accelerator is controlled to impose a high voltage; and the accelerator is caused to impose a beam emitting frequency to a normal beam emitting range. However at this time, the electron gun of the accelerator is not imposed with a high voltage. The second signal is a signal for determining whether the train has reached a position where beam warming up can be performed, and can be acquired through the sensor set S1.

At step S606, in the beam warm-up state, when the train is automatically identified and confirmed again as a cargo train, the accelerator is maintained in the beam warm-up state.

For example, with the movement of the vehicle, the system identifies the current train as a cargo train according to information from the sensor set S2. Then, a dialog box is popped out on an operation interface, prompting the operator to confirm whether or not to scan. After the operator confirms, the dialog box disappears and the system can maintain the beam warm-up state. On the contrary, based on the sensor set S1 information, it is identified that the current train is a passenger train, or the locomotive is not at the front of the train, the operator can cancel the scan, and the system turns off the scanning device.

At step S608, according to a third signal, the beam emitting frequency of the accelerator is decreased.

For example, the beam emitting frequency of the accelerator can be decreased to one tenth or less of a normal beam emitting frequency. The third signal is a signal for determining whether a part of the train which cannot be scanned has reached the entrance of the scanning channel. The third signal can be sent from a sensor disposed for example at a curtain 150 at the entrance of the scanning channel 140 for security inspection. However, the present disclosure is not limited thereto. For example, when the technical solution of the present disclosure is applied for fast inspection, the third signal can be sent from other detector element disposed at a proper position.

As described above, according to safety rules, a locomotive, a passenger train, the locomotive or the passenger train, and the locomotive or a cargo compartment immediately adjacent to the locomotive are parts that cannot be scanned. It can be understood that parts that cannot be scanned can be defined otherwise.

At step S610, according to a fourth signal, the beam emitting frequency of the accelerator is restored, and the accelerator is controlled to emit beams. The fourth signal can be, for example, a signal for determining whether the part of the train which cannot be scanned has left the center of the beam of the scanning device, and can be acquired through the sensor set S2, for example. According to the fourth signal, the beam emitting frequency of the accelerator can be restored to the normal range. Then, the electron gun of the accelerator is enabled to generate electrons, so that the accelerator is caused to emit beams. It can be understood that the accelerator can be controlled to emit beams under other conditions depending on practical requirements.

According to some embodiments, wheel-rim sensors S0, S1 and S2 are disposed respectively at a first position, a second position, a third position and a fourth position along the rail at one side of the scanning device. Wheel-rim signals of the train can be acquired through the wheel-rim sensors, and it can be determine whether the train has reached or left the first position, the second position or the third position accordingly. At least one of the train speed signal, the wheel base distance signal and a section signal of two compartments can be acquired based on the wheel-rim signals of the train from the wheel-rim sensors. Also, it can be determined whether the train is a locomotive, a passenger compartment or a cargo compartment based on the wheel base distance. However, the present disclosure is not limited thereto.

As described above, for example, when the part that cannot be scanned passes through the sensor set S2, the system can calculate a time when a cargo compartment that can be scanned reaches the center of the beam based on information from the sensor set S0. This belongs to known technology in the art, and will not be elaborated herein.

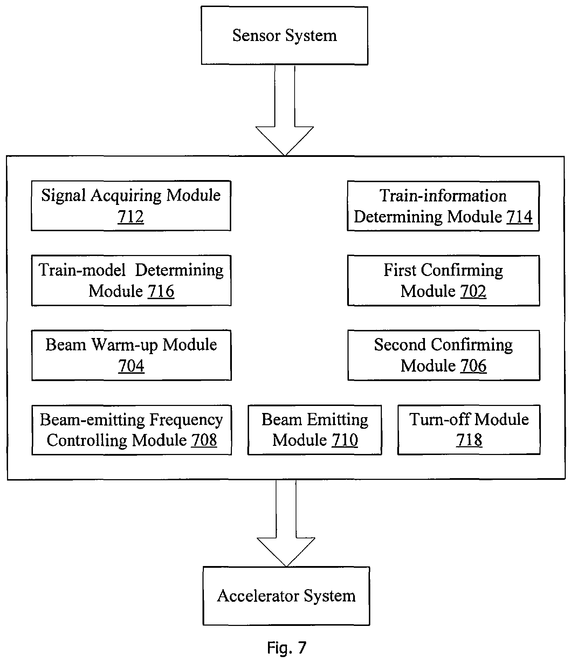

Fig. 7 illustrates a block diagram of a system for security inspection according to an exemplary embodiment of the present disclosure. The system as shown in Fig. 7 can implement the method that is described with reference to Fig. 6.

As shown in Fig. 7, according to an exemplary embodiment, the system for security inspection can include a first confirming module 702, a beam warm-up module 704, a second confirming module 706, a beam-emitting frequency controlling module 708 and a beam emitting module 710.

The first confirming module 702 can be configured to, according to a first signal, after it is confirmed that the train is a cargo train, control the scanning device to enter an enabled state.

The beam warm-up module 704 can be configured to, according to a second signal, if the accelerator is not in a beam warm-up state, cause the accelerator to enter the beam warm-up state.

According to some embodiment, the beam warm-up module 704 can include a high-voltage imposing unit, configured to control the accelerator to impose a high voltage.

The second confirming module 706 can be configured to, in the beam warm-up state, when the train is automatically identified and confirmed again as a cargo train, maintain the accelerator in the beam warm-up state.

The beam-emitting frequency controlling module 708 can be configured to, according to a third signal, decrease the beam emitting frequency of the accelerator, or according to a fourth signal, restore the beam emitting frequency of the accelerator. As described above, the beam-emitting frequency controlling module 708 can be configured to decrease the beam-emitting frequency to one tenth or less of a normal beam emitting frequency, or restore the decreased beam-emitting frequency to a normal range. According to some embodiments, the beam-emitting frequency controlling module 708 can also cause the beam-emitting frequency of the accelerator to match with the moving speed of the train.

The beam emitting module 710 can be configured to, according to a fourth signal, control the accelerator to emit beams. According to the fourth signal, the beam emitting module 710 can enable the electron gun of the accelerator to generate electrons, so that the accelerator is caused to emit beams.

According to some embodiments, the system can also include a signal acquiring module 712, configured to acquire the first signal for determining whether the train has come, the second signal for determining whether the train has reached a position where beam warming up can be performed, the third signal for determining whether a part of the train which cannot be scanned has reached the entrance of the scanning channel, and the fourth signal for determining whether the part of the train which cannot be scanned has left the center of the beam of the scanning device. The signal acquiring module 712 can acquire signals from the wheel-rim sensors.

According to some embodiments, the system can include a train-information determining module 714, configured to acquire a train speed signal, a wheel base distance signal and a section signal of two compartments based on wheel-rim signals acquired from the wheel-rim sensors.

According to some embodiments, the system can also include a train-model determining module 716, configured to determine whether the train is a locomotive, a passenger compartment or a cargo compartment according to the wheel base distance. As described above, a locomotive, a passenger train, the locomotive or the passenger train, and the locomotive or a cargo compartment immediately adjacent to the locomotive are parts that cannot be scanned.

According to some embodiments, the system can also include a turn-off module 718, configured to, if in the beam warm-up state, it is automatically identified that the train is a passenger train, or a locomotive is not at the front of the train, turn off the scanning device.

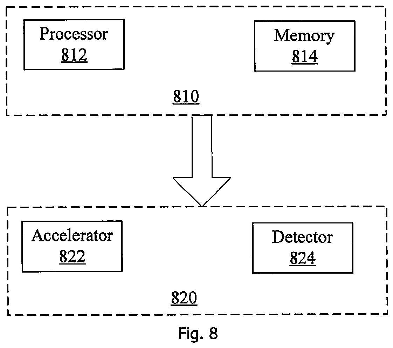

Fig. 8 illustrates a block diagram of a system for security inspection according to another exemplary embodiment of the present disclosure.

Referring to Fig. 8, the system for security inspection according to the exemplary embodiment can include a control device 810 and a scanning device 820. The scanning device 820 can include an accelerator 822 and a detector 824, configured to perform security inspection on the train. The control device 810 can include a processor 812 and a memory 814. The memory 814 is configured to store instruction codes. The instruction codes is executed by the processor 812 to cause the control device 810 to control the scanning device 820 to perform:

according to a first signal, after it is confirmed that the train is a cargo train, the scanning device is controlled to enter an enabled state; according to a second signal, if the accelerator is not in a beam warm-up state, the accelerator is caused to enter the beam warm-up state; in the beam warm-up state, when the train is automatically identified by the system and manually confirmed again as a cargo train, the beam warm-up state is maintained; according to a third signal, the beam emitting frequency of the accelerator is decreased; and according to a fourth signal, the beam emitting frequency of the accelerator is restored, and the accelerator is controlled to emit beams.

From the above description, it can be understood by those skilled in the art that, the system and the method according to the embodiment of the present disclosure has one or more of the following advantages.

The beam emitting timing can be controlled properly, to provide a better safety guard.

When a locomotive or other part that cannot be scanned passes, the beam emitting frequency can be decreased in the warm up state. The operation is more convenient and fast, and can provide a safety guard.

The beam emitting frequency can be matched with the train speed, and a more clear scanned image can be acquired.

With the description of the above embodiments, it will be readily understood by those skilled in the art that the method and corresponding modules of the embodiments of the present disclosure may be implemented by software or partially by hardening software. Thereof, the technical solution of the embodiments of the present disclosure may be embodied in the form of a software product which may be stored in a nonvolatile storage medium (which may be a CD-ROM, a U disk, a mobile hard disk, etc.), including several instructions, to cause a computing device (which may be a personal computer, a server, a mobile terminal, or a network device, etc.) to perform a method according to an embodiment of the present disclosure.

It will be understood by those skilled in the art that the drawings are merely schematic diagrams of exemplary embodiments and that the modules or processes in the drawings are not necessarily essential to implement the present disclosure and are therefore not intended to limit the scope of the present disclosure.

It will be understood by those skilled in the art that the above-described modules may be distributed in the device in accordance with the description of the embodiments, or may be modified in one or more devices different from the present embodiments. The modules of the above embodiments may be combined into one module or may be further divided into a plurality of sub-modules.

**Claims**

1.  A method for security inspection, for performing security inspection on a train with a scanning device comprising an accelerator and a detector, comprising:

    according to a first signal for determining whether the train has come, after it is confirmed that the train is a cargo train, controlling (S602) the scanning device to enter an enabled state;
    according to a second signal for determining whether the train has reached a position where beam warming up can be performed, if the accelerator is not in a beam warm-up state, causing (S604) the accelerator to enter the beam warm-up state, wherein in the warm-up state, the accelerator is controlled to impose a high voltage, so that a beam emitting frequency of the accelerator is increased to a frequency matched with a moving speed of the train, and an electron gun of the accelerator is not imposed with a high voltage;
    in the beam warm-up state, when the train is automatically identified by a system and manually confirmed again as a cargo train, maintaining (S606) the beam warm-up state;
    according to a third signal for determining whether a part of the train which cannot be scanned has reached the entrance of the scanning channel, decreasing (S608) the beam emitting frequency of the accelerator; and
    according to a fourth signal for determining whether the part of the train which cannot be scanned has left the center of the beam of the scanning device, restoring (S610) the beam emitting frequency of the accelerator, and controlling the accelerator to emit beams.

2.  The method for security inspection according to claim 1, wherein decreasing (S608) the beam emitting frequency of the accelerator comprises: decreasing the beam emitting frequency to one tenth or less of said frequency matched with the moving speed of the train and larger than zero.

3.  The method for security inspection according to claim 1, wherein if in the beam warm-up state, it is automatically identified that the train is a passenger train, or a locomotive is not at the front of the train, the scanning device is turned off.

4.  A system for security inspection, for performing security inspection on a train with a scanning device comprising an accelerator and a detector, comprising:

    a first confirming module (702) configured to, according to a first signal for determining whether the train has come, after it is confirmed that the train is a cargo train, control the scanning device to enter an enabled state;
    a beam warm-up module (704) configured to, according to a second signal for determining whether the train has reached a position where beam warming up can be performed, if the accelerator is not in a beam warm-up state, cause the accelerator to enter the beam warm-up state, wherein in the beam warm-up state, the system is configured to control the accelerator to impose a high voltage, so that a beam emitting frequency of the accelerator is increased to a frequency matched with a moving speed of the train, and an electron gun of the accelerator is not imposed with a high voltage;
    a second confirming module (706) configured to, in the beam warm-up state, when the train is automatically identified by the system and manually confirmed again as a cargo train, maintain the beam warm-up state;
    a beam-emitting frequency controlling module (708) configured to, according to a third signal for determining whether a part of the train which cannot be scanned has reached the entrance of the scanning channel, decrease the beam emitting frequency of the accelerator, or according to a fourth signal, restore the beam emitting frequency of the accelerator; and
    a beam emitting module (710) configured to, according to a fourth signal for determining whether the part of the train which cannot be scanned has left the center of the beam of the scanning device, control the accelerator to emit beams.

5.  The system for security inspection according to claim 4, further comprises:
    a signal acquiring module (712) configured to acquire the first signal, the second signal, the third signal, and the fourth signal.

**6.** The system for security inspection according to claim 5, wherein the signal acquiring module (712) is configured to acquire signals from wheel-rim sensors.

**7.** The system for security inspection according to claim 6, further comprises:

a train-information determining module (714) configured to acquire a wheel base distance signal, a train speed signal and a section signal of two compartments based on wheel-rim signals acquired from the wheel-rim sensors, which are acquired by the signal acquiring module (712); and

a train-model determining module (716) configured to determine whether the train is a locomotive, a passenger compartment or a cargo compartment according to the wheel base distance.

**8.** The system for security inspection according to claim 5, wherein a locomotive, a passenger train, and/or a cargo compartment immediately adjacent to the locomotive or the passenger train are parts that cannot be scanned.

**9.** The system for security inspection according to claim 4, wherein the beam emitting module (710) is further configured to control the beam emitting frequency of the accelerator according to the speed of the train.

**10.** A computer program, which when executing on a processor (812) of a system for security inspection, performs a method according to any one of claims 1-3.

**Patentansprüche**

**1.** Verfahren zur Sicherheitsinspektion zum Durchführen einer Sicherheitsinspektion an einem Zug mit einer Abtastvorrichtung, die einen Beschleuniger und einen Detektor umfasst, umfassend:

in Übereinstimmung mit einem ersten Signal zum Bestimmen, ob der Zug eingetroffen ist, nachdem bestätigt wurde, dass der Zug ein Güterzug ist, Steuern (S602) der Abtastvorrichtung, sodass sie in einen aktivierten Zustand eintritt,

in Übereinstimmung mit einem zweiten Signal zum Bestimmen, ob der Zug eine Position erreicht hat, an der Strahlaufwärmung durchgeführt werden kann, wenn sich der Beschleuniger nicht in einem Strahlaufwärm-Zustand befindet, Veranlassen (S604), dass der Beschleuniger in den Strahlaufwärm-Zustand eintritt, wobei der Beschleuniger im Aufwärmzustand so gesteuert wird, dass er eine hohe Spannung anordnet, sodass eine Strahl-Emissionsfrequenz des Beschleunigers auf eine Frequenz erhöht wird, die mit einer Bewegungsgeschwindigkeit des Zugs übereinstimmt, und einer Elektronenkanone des Beschleunigers keine hohe Spannung angeordnet wird,

im Strahlaufwärm-Zustand, wenn der Zug durch ein System automatisch identifiziert ist und manuell erneut als ein Güterzug bestätigt ist, Aufrechterhalten (S606) des Strahlaufwärm-Zustands,

in Übereinstimmung mit einem dritten Signal zum Bestimmen, ob ein Teil des Zugs, der nicht abgetastet werden kann, den Eingang des Abtastkanals erreicht hat, Verringern (S608) der Strahl-Emissionsfrequenz des Beschleunigers, und

in Übereinstimmung mit einem vierten Signal zum Bestimmen, ob der Teil des Zugs, der nicht abgetastet werden kann, das Zentrum des Strahls der Abtastvorrichtung verlassen hat, Wiederherstellen (S610) der Strahl-Emissionsfrequenz des Beschleunigers und Steuern des Beschleunigers, sodass er Strahlen emittiert.

**2.** Verfahren zur Sicherheitsinspektion nach Anspruch 1, wobei das Verringern (S608) der Strahl-Emissionsfrequenz des Beschleunigers umfasst: Verringern der Strahl-Emissionsfrequenz auf ein Zehntel oder weniger der Frequenz, die mit der Bewegungsgeschwindigkeit des Zugs übereinstimmt, und größer als null.

**3.** Verfahren zur Sicherheitsinspektion nach Anspruch 1, wobei, wenn im Strahlaufwärm-Zustand automatisch identifiziert ist, dass der Zug ein Personenzug ist oder sich kein Triebwagen vor dem Zug befindet, die Abtastvorrichtung ausgeschaltet wird.

**4.** System zur Sicherheitsinspektion zum Durchführen einer Sicherheitsinspektion an einem Zug mit einer Abtastvorrichtung, die einen Beschleuniger und einen Detektor umfasst, umfassend:

ein erstes Bestätigungsmodul (702), das dazu ausgestaltet ist, in Übereinstimmung mit einem ersten Signal zum Bestimmen, ob der Zug eingetroffen ist, nachdem bestätigt wurde, dass der Zug ein Güterzug ist, die Abtastvorrichtung so zu steuern, dass sie in einen aktivierten Zustand eintritt,

ein Strahlaufwärm-Modul (704), das dazu ausgestaltet ist, in Übereinstimmung mit einem zweiten Signal zum Bestimmen, ob der Zug eine Position erreicht hat, an der Strahlaufwärmung durchgeführt werden kann, wenn sich der Beschleuniger nicht in einem Strahlaufwärm-Zustand befindet, zu veranlassen, dass der Beschleuniger in den Strahlaufwärm-Zustand eintritt, wobei das System im Strahlaufwärm-Zustand dazu ausgestaltet ist, den Beschleuniger so zu steuern, dass er eine hohe Spannung anordnet, sodass eine Strahl-Emissionsfrequenz des Beschleunigers auf eine Frequenz erhöht wird, die mit einer Bewegungsgeschwindigkeit des Zugs übereinstimmt, und einer Elektronenkanone des Beschleunigers keine hohe Spannung angeordnet wird,

ein zweites Bestätigungsmodul (706), das dazu ausgestaltet ist, im Strahlaufwärm-Zustand, wenn der Zug durch das System automatisch identifiziert ist und manuell erneut als ein Güterzug bestätigt ist, den Strahlaufwärm-Zustand aufrechtzuerhalten,

ein Strahlemissionsfrequenz-Steuermodul (708), das dazu ausgestaltet ist, in Übereinstimmung mit einem dritten Signal zum Bestimmen, ob ein Teil des Zugs, der nicht abgetastet werden kann, den Eingang des Abtastkanals erreicht hat, die Strahl-Emissionsfrequenz des Beschleunigers zu verringern, oder in Übereinstimmung mit einem vierten Signal, die Strahl-Emissionsfrequenz des Beschleunigers wiederherzustellen, und

ein Strahl-Emissionsmodul (710), das dazu ausgestaltet ist, in Übereinstimmung mit einem vierten Signal zum Bestimmen, ob der Teil des Zugs, der nicht abgetastet werden kann, das Zentrum des Strahls der Abtastvorrichtung verlassen hat, den Beschleuniger so zu steuern, dass er Strahlen emittiert.

5. System zur Sicherheitsinspektion nach Anspruch 4, ferner umfassend:
ein Signalerlangungs-Modul (712), das dazu ausgestaltet ist, das erste Signal, das zweite Signal, das dritte Signal und das vierte Signal zu erlangen.

6. System zur Sicherheitsinspektion nach Anspruch 5, wobei das Signalerlangungs-Modul (712) dazu ausgestaltet ist, Signale von Radkranz-Sensoren zu erlangen.

7. System zur Sicherheitsinspektion nach Anspruch 6, ferner umfassend:

ein Zuginformations-Bestimmungsmodul (714), das dazu ausgestaltet ist, ein Radstand-Abstandssignal, ein Zuggeschwindigkeits-Signal und ein Sektionssignal von zwei Abteilen auf Grundlage der von den Radkranz-Sensoren erlangten Radkranz-Signalen zu erlangen, die durch das Signalerlangungs-Modul (712) erlangt werden, und

ein Zugmodell-Bestimmungsmodul (716), das dazu ausgestaltet ist, in Übereinstimmung mit dem Radstand-Abstand zu bestimmen, ob der Zug ein Triebwagen, ein Personenabteil oder ein Güterabteil ist.

8. System zur Sicherheitsinspektion nach Anspruch 5, wobei ein Triebwagen, ein Personenzug und/oder ein Güterabteil unmittelbar angrenzend an den Triebwagen oder den Personenzug Teile sind, die nicht abgetastet werden können.

9. System zur Sicherheitsinspektion nach Anspruch 4, wobei das Strahl-Emissionsmodul (710) ferner dazu ausgestaltet ist, die Strahl-Emissionsfrequenz des Beschleunigers in Übereinstimmung mit der Geschwindigkeit des Zugs zu steuern.

10. Computerprogramm, das bei Ausführung auf einem Prozessor (812) eines Systems zur Sicherheitsinspektion ein Verfahren nach einem der Ansprüche 1-3 durchführt.

**Revendications**

1. Procédé d'inspection de sécurité, pour réaliser une inspection de sécurité sur un train avec un dispositif de balayage comprenant un accélérateur et un détecteur, comprenant le fait de :

en fonction d'un premier signal pour déterminer si le train est arrivé, après qu'il a été confirmé que le train est un train de marchandises, commander (S602) le dispositif de balayage pour entrer dans un état inactivé ;
en fonction d'un deuxième signal pour déterminer si le train a atteint une position où un réchauffement de faisceau peut être réalisé, si l'accélérateur n'est pas dans un état de réchauffement de faisceau, amener (S604) l'accélérateur à entrer dans l'état de réchauffement de faisceau, dans lequel dans l'état de réchauffement de faisceau, l'accélérateur est commandé pour imposer une haute tension, de sorte qu'une fréquence d'émission de faisceau de l'accélérateur soit augmentée à une fréquence mise en correspondance avec une vitesse de déplacement du train, et un canon à électrons de l'accélérateur ne se voie pas imposer une haute tension ;
dans l'état de réchauffement de faisceau, lorsque le train est automatiquement identifié par un système et encore une fois confirmé manuellement en tant que train de marchandises, maintenir (S606) l'état de réchauffement de faisceau ;
en fonction d'un troisième signal pour déterminer si une partie du train qui ne peut pas être balayée a atteint l'entrée du canal de balayage, réduire (S608) la fréquence d'émission de faisceau de l'accélérateur ; et
en fonction d'un quatrième signal pour déterminer si la partie du train qui ne peut pas être balayée a quitté le centre du faisceau du dispositif de balayage, restaurer (S610) la fréquence d'émission de faisceau de l'accélérateur et commander l'accélérateur pour émettre des faisceaux.

2. Procédé d'inspection de sécurité selon la revendication 1, dans lequel le fait de réduire (S608) la fréquence d'émission de faisceau de l'accélérateur comprend : le fait de réduire la fréquence d'émission de faisceau à un dixième ou moins de ladite fréquence mise en correspondance avec la vitesse de déplacement du train et supérieure à zéro.

3. Procédé d'inspection de sécurité selon la revendication 1, dans lequel si dans l'état de réchauffement de faisceau, il est automatiquement identifié que le train est un train de voyageurs, ou une locomotive n'est pas à l'avant du train, le dispositif de balayage est éteint.

4. Système d'inspection de sécurité, pour réaliser une inspection de sécurité sur un train avec un dispositif de balayage comprenant un accélérateur et un détecteur, comprenant :

un premier module de confirmation (702) configuré pour, en fonction d'un premier signal pour déterminer si le train est arrivé, après qu'il a été confirmé que le train est un train de marchandises, commander le dispositif de balayage pour entrer dans un état inactivé ;
un module de réchauffement de faisceau (704) configuré pour, en fonction d'un deuxième signal pour déterminer si le train a atteint une position où un réchauffement de faisceau peut être réalisé, si l'accélérateur n'est pas dans un état de réchauffement de faisceau, amener l'accélérateur à entrer dans l'état de réchauffement de faisceau, dans lequel dans l'état de réchauffement de faisceau, le système est configuré pour commander l'accélérateur afin d'imposer une haute tension, de sorte qu'une fréquence d'émission de faisceau de l'accélérateur soit augmentée à une fréquence mise en correspondance avec une vitesse de déplacement du train, et un canon à électrons de l'accélérateur ne se voie pas imposer une haute tension ;
un second module de confirmation (706) configuré pour, dans l'état de réchauffement de faisceau, lorsque le train est automatiquement identifié par le système et encore une fois confirmé manuellement en tant que train de marchandises, maintenir l'état de réchauffement de faisceau ;
un module de commande de fréquence d'émission de faisceau (708) configuré pour, en fonction d'un troisième signal pour déterminer si une partie du train qui ne peut pas être balayée a atteint l'entrée du canal de balayage, réduire la fréquence d'émission de faisceau de l'accélérateur, ou en fonction d'un quatrième signal, restaurer la fréquence d'émission de faisceau de l'accélérateur ; et
un module d'émission de faisceau (710) configuré pour, en fonction d'un quatrième signal pour déterminer si la partie du train qui ne peut pas être balayée a quitté le centre du faisceau du dispositif de balayage, commander l'accélérateur pour émettre des faisceaux.

5. Système d'inspection de sécurité selon la revendication 4, comprenant en outre :
un module d'acquisition de signal (712) configuré pour acquérir le premier signal, le deuxième signal, le troisième signal et le quatrième signal.

6. Système d'inspection de sécurité selon la revendication 5, dans lequel le module d'acquisition de signal (712) est configuré pour acquérir des signaux depuis des capteurs de jante.

7. Système d'inspection de sécurité selon la revendication 6, qui comprend en outre :

un module de détermination d'information de train (714) configuré pour acquérir un signal de distance d'entraxe des essieux, un signal de vitesse de train et un signal de section de deux compartiments sur la base de signaux de jante acquis depuis les capteurs de jante, qui sont acquis par le module d'acquisition de signal (712) ; et
un module de détermination de modèle de train (716) configuré pour déterminer si le train est une locomotive ; un compartiment de voyageurs ou un compartiment à bagages en fonction de la distance d'entraxe des essieux.

8. Système d'inspection de sécurité selon la revendication 5, dans lequel une locomotive, un train de voyageurs et/ou un compartiment à bagages immédiatement adjacent à la locomotive ou au train de voyageurs sont des parties qui ne peuvent pas être balayées.

9. Système d'inspection de sécurité selon la revendication 4, dans lequel le module d'émission de faisceau (710) est en outre configuré pour commander la fréquence d'émission de faisceau de l'accélérateur en fonction de la vitesse du train.

10. Programme informatique qui, lorsqu'il est exécuté sur un processeur (812) d'un système d'inspection de sécurité, réalise un procédé selon l'une quelconque des revendications 1 à 3.

Fig. 1

Upstream
Travelling        Center of Beam        Downstream
                                        Traveling

1 2 3        1 2 3        1 2 3        1 2 1        2 2 1        3 2 1
S0           S1           S2           X2           X1           X0

4Meters          4Meters

Fig. 2

110

Center of Beam

150                                    160        140

S0        S1        S2        X2        X1        X0

4Meters  4Meters

AM1                10Meters    10Meters              AM2

300Meters    100Meters        100Meters    300Meters

120

Fig. 3

Fig. 4

Fig. 5

```
                            ┌─────────────┐
                            │    Start    │
                            └──────┬──────┘
                                   │
                                   ▼
         ┌───────────────────────────────────────────────┐        ┌── S602
         │  According To A First Signal, After It Is Confirmed │
         │  That The Train Is A Cargo Train, Controlling The  │
         │      Scanning Device To Enter An Enabled State      │
         └───────────────────────────────────────────────┘
                                   │
                                   ▼
         ┌───────────────────────────────────────────────┐        ┌── S604
         │  According To A Second Signal, If The Accelerator Is │
         │          Not In A Beam Warm-up State, Causing The   │
         │       Accelerator To Enter The Beam Warm-up State   │
         └───────────────────────────────────────────────┘
                                   │
                                   ▼
         ┌───────────────────────────────────────────────┐        ┌── S606
         │    In The Beam Warm-up State, When The Train Is    │
         │  Automatically Identified By A System And Manually │
         │  Confirmed Again As A Cargo Train, Maintaining The │
         │               Beam Warm-up State                  │
         └───────────────────────────────────────────────┘
                                   │
                                   ▼
         ┌───────────────────────────────────────────────┐        ┌── S608
         │  According To A Third Signal, Decreasing The Beam  │
         │         Emitting Frequency Of The Accelerator     │
         └───────────────────────────────────────────────┘
                                   │
                                   ▼
         ┌───────────────────────────────────────────────┐        ┌── S610
         │  According To A Fourth Signal, Restoring The Beam  │
         │        Emitting Frequency Of The Accelerator, And │
         │        Controlling The Accelerator To Emit Beams  │
         └───────────────────────────────────────────────┘
```

Fig. 6

```
                    ┌─────────────────────────┐
                    │     Sensor System        │
                    └─────────────────────────┘
                               │
                               ▼
┌──────────────────────────────────────────────────────────────┐
│                                                                │
│  ┌──────────────────────┐      ┌──────────────────────────┐   │
│  │ Signal Acquiring      │      │ Train-information         │   │
│  │ Module 712            │      │ Determining Module 714    │   │
│  └──────────────────────┘      └──────────────────────────┘   │
│                                                                │
│  ┌──────────────────────┐      ┌──────────────────────────┐   │
│  │ Train-model Determining│      │ First Confirming         │   │
│  │ Module 716            │      │ Module 702               │   │
│  └──────────────────────┘      └──────────────────────────┘   │
│                                                                │
│  ┌──────────────────────┐      ┌──────────────────────────┐   │
│  │ Beam Warm-up Module   │      │ Second Confirming         │   │
│  │ 704                   │      │ Module 706               │   │
│  └──────────────────────┘      └──────────────────────────┘   │
│                                                                │
│  ┌──────────────────────┐  ┌────────────┐  ┌──────────────┐   │
│  │ Beam-emitting Frequency│  │ Beam Emitting│  │ Turn-off Module│  │
│  │ Controlling Module 708 │  │ Module 710   │  │ 718           │  │
│  └──────────────────────┘  └────────────┘  └──────────────┘   │
│                                                                │
└──────────────────────────────────────────────────────────────┘
                               │
                               ▼
                    ┌─────────────────────────┐
                    │   Accelerator System     │
                    └─────────────────────────┘
```

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105445808 A
- CN 105447528 A
- EP 2236387 A
- CN 105548223 A
- WO 2016060542 A